# EUROPEAN PATENT SPECIFICATION

(11) **EP 3 498 130 B1**
(45) Date of publication and mention of the grant of the patent: **03.07.2024**
(21) Application number: 18198842.9
(22) Date of filing: 05.10.2018
(51) Int. Cl.: A47B 87/00, A47B 87/02, F16B 12/20

(54) **A FIXING SYSTEM FOR FIXING A CROSSPIECE AT AN INTERSPACE COMPRISED BETWEEN THE SIDE WALLS OF CONSECUTIVE MODULES OF A PIECE OF FURNITURE, AND A PIECE OF FURNITURE AND A METHOD FOR FIXING THE CROSSPIECE**
BEFESTIGUNGSSYSTEM ZUR BEFESTIGUNG EINES QUERTRÄGERS AN EINEM BESTEHENDEN ZWISCHENRAUM ZWISCHEN DEN SEITENWÄNDEN VON AUFEINANDERFOLGENDEN MODULEN EINES MÖBELS SOWIE MÖBEL UND VERFAHREN ZUR BEFESTIGUNG DES QUERTRÄGERS
SYSTÈME DE FIXATION D'UNE TRAVERSE DANS UN ESPACE INTERMÉDIAIRE COMPRIS ENTRE LES PAROIS LATÉRALES DE MODULES CONSÉCUTIFS D'UN MEUBLE, MEUBLE ET PROCÉDÉ DE FIXATION DE LA TRAVERSE

(30) Priority: 09.10.2017 IT 201700113132
(43) Date of publication of application: 19.06.2019
(73) Proprietor: SCILM S.p.A., 35013 Cittadella (Prov. of Padova) (IT)
(72) Inventor: SCUDIERO, Paolo, 35013 Cittadella Padova (IT)
(74) Representative: Anselmi, Davide

(56) References cited:
- EP-A2- 0 388 655
- FR-A1- 2 934 022
- GB-A- 146 508
- US-A1- 2012 321 378
- US-B1- 6 487 759

## Description

### TECHNICAL FIELD

The present invention relates to a fixing system for fixing a groove-shaped crosspiece at at least one interspace comprised between the side walls of consecutive modules of a piece of furniture, the piece of furniture itself and the relative method for fixing said crosspiece to said interspace.

### PRIOR ART

Generally, the assembly of furniture composed of several modules envisages that the latter are placed side by side with one another in pairs, such that the side wall of a first module faces toward the side wall of a second module. It is knowns to use some connecting system, for example, as disclosed in document FR2934022.

The modules must be bound to each other, and to implement this many techniques require an interspace to be maintained between the side walls, useful for positioning connection means between the modules and a crosspiece, usually flat or groove-shaped, capable of masking such a discontinuity and giving the aesthetic semblance of a piece of furniture consisting of a single continuous module.

According to the Italian patent application for a utility model 202016000103927 of the same patentee, the fixing of modules of the piece of furniture envisages the use of a device formed in a single piece that can be interposed between the side walls of the modules themselves and can be fixed to the latter at their thickness. This fixing takes place by means of a flap which extends out from the device in the front and is shaped like a template such to serve the function of positioning the device itself in the desired orientation, and a fixing function insofar as it has holes which are useful for interposing fixing means between the flap itself and the thickness of the side wall of the module on which it extends. Moreover, this device has an appendix, commonly defined as spear-shaped, which is in the front and protruding and adapted to support the crosspiece covering the interspace.

However, this prior art has a series of drawbacks which the present invention aims to overcome, which are essentially linked to both the encumbrance caused by the fixing of the flap on the thickness, and the type of fixing itself.

This drawback is reflected in the fact that the groove-shaped crosspiece cannot extend beyond a certain depth, with the consequence that not all types of grooves can be installed on such fixing system.

A further drawback follows from the fact that this device is composed of a single element. This implies that the installation of the fixing system must be performed once the modules have been arranged at a precise and defined distance from each other, therein prohibiting positioning corrections at a later stage, if not with the additional drawbacks of the case (such as interposing other fixing means again...).

A last drawback derives from the way in which the device is fixed to the module. The fixing screws are screwed at the thickness of the side wall, however this fixing point is more susceptible to breakage and the insertion of a screw obliquely in relation to the thickness risks ruining the piece of furniture, given the possibility that the screw could laterally pass through the entire thickness, being visible from inside the piece of furniture.

### SUMMARY

In this context, the technical task underlying the present invention is to overcome the drawback of the prior art mentioned above by proposing a system for fixing a groove-shaped crosspiece at at least one interspace between the side walls of consecutive modules of a same piece of furniture and the relative method of fixing the crosspiece to the piece of furniture.

In particular, the object of the present invention is firstly to provide a fixing system which makes it possible to keep the screws hidden from the outside of the piece of furniture.

Furthermore, an object of the present invention is to optimize the dimensions of the fixing system so as to be able to install any type of groove (deeper or shallower).

A further object of the present invention is to confine the system within the interspace between the modules.

Therefore, the present invention is defined in claim 1 and is related to a piece of furniture comprising a fixing system for fixing a crosspiece, preferably a groove-shaped crosspiece, at an interspace between the side walls of consecutive modules of a same piece of furniture. This invention comprises three separate pieces.

In substance, with respect to the solution proposed by the prior art, the advantage proposed by the invention is defined in claim 1 and relates to piece of furniture and comprising a a fixing system consisting of three elements, two of which are installed on the walls, of two adjacent modules, facing each other, while the third, interposed between them, keeps the structure united and provides a fixing point for the crosspiece.

According to one aspect of the invention, the first supporting element has at least one lateral retention element opposite to the first portion with respect to the first track, such that the lateral retention element defines a lateral constraint with respect to the longitudinal direction of extension for the first part of the connection element interposed between the first portion and the lateral retention element itself. Similarly, the second supporting element has at least one lateral retention element opposite the second portion with respect to the second track, such that the lateral retention element defines a lateral constraint with respect to the longitudinal direction of extension for the second part of the connection element interposed between the second portion and the lateral retention element itself.

Advantageously, the lateral retention element adds strength to the fixing system, ensuring the firm placement of the connection element once it is interposed between the first and second supporting element in a constrained state, simultaneously ensuring that the first and second part of the connection element can slide along the first and second track, respectively.

According to another aspect of the invention, in order to fix the first and second supporting element to the side wall of the first and second module, respectively, the system comprises fixing means comprising a plurality of screws inserted through the respective supporting element such to enter into the respective side wall of the piece of furniture.

Advantageously the system is fast because it uses self-tapping screws which do not require drilling a hole in the side wall.

Preferably, the first and second portion of the supporting elements have a plurality of holes arranged staggered with respect to the lateral retention elements, for the interposition of the screws for fixing the first and second supporting elements, respectively, to the side wall of the first and second modules.

Advantageously, the staggering between the position of the holes and the lateral retention elements makes it easy to fix the supporting elements.

According to one aspect of the invention, at least one supporting element has on one of its front portions facing the crosspiece at least one template element for the correct positioning of the same supporting element with respect to an edge of the corresponding side wall. In fact, the template element extends in length for a predetermined length from the supporting element to a front edge of the corresponding side wall, so as to distance the corresponding track according to the predetermined length and, in a second moment, remove this template element from the supporting element.

Preferably, a plurality of template elements are arranged distanced from each other in order to obtain a precise alignment and positioning of the relative supporting element.

Advantageously, the presence of at least two template elements arranged near the ends of the supporting element makes it possible to correct the positioning of the latter obtaining the desired orientation and positioning. Therefore, the system does not require any specific templates or preholes, because the same device is equipped with template elements that are then removed.

According to a further aspect of the invention, the fixing system comprises a plurality of travel limit stop elements arranged between the connection element, which extends between the two ends placed along the longitudinal direction of extension, and at least one travel limit stop element to stop the sliding of the connection element in the constrained state.

This travel limit stop element can be arranged on the supporting elements or on the connecting element or on both.

Preferably, at least one travel limit stop element comprises a protrusion of the connection element arranged at one end of the connection element (preferably on top) which overlays the supporting elements to determine the stop when the stroke of the connection element is completed along a sliding direction.

Alternatively or in addition, at least one travel limit stop element comprises stop elements arranged at a (lower) end of at least one track of the supporting element for the formation of a constraint between the stop elements and one end of the connection element.

According to one aspect of the invention, the reversible connecting means comprises a spear-shaped element protruding towards the crosspiece and extending along the longitudinal direction of extension and having a first surface facing towards the side wall of the first module and a second surface facing toward the side wall of the second module.

Preferably, both surfaces of the spear-shaped element have a knurling composed of parallel lines in relief which are oriented along the longitudinal direction of extension as well as along a transverse direction for the fixing of the crosspiece and to prevent sliding along the longitudinal direction of extension.

Advantageously, the presence of a spear-shaped element with knurls on both of its surfaces provides a fixing and position-retention element for the crosspiece installed to cover the interspace between the modules.

According to a further aspect of the invention, at least one supporting element has an abutment element on one front portion extending towards the front portion of the panel to define a support for the crosspiece at the moment of fixing.

Advantageously, providing the fixing system with abutment points makes the step of installation of the crosspiece easier and provides more contact points capable of retaining the structure in position and solid over time.

According to one aspect of the invention, the fixing system comprises a plurality of fixing modules, each comprising a first supporting element, a second supporting element and a connection element, such that the fixing modules are arranged along the longitudinal direction of extension of the interspace between the side walls of consecutive modules of a piece of furniture.

Having a plurality of fixing modules with respect to a single one having a length comparable with that of the total interspace and/or crosspiece makes it possible to install the modules only in the desired points, while providing additional fixing points for the crosspiece and keeps the installation phase simple, considering the small size that a fixing module can have with a plurality of fixing modules with respect to a single one.

For example, a variable number of fixing modules can be used in relation to requirements and preferably in a manner proportional to the extension of the interspace.

As defined in claim 1, the invention relates to a piece of furniture composed of modules and a horizontal or vertical or oblique interspace comprised between the side walls of the modules, and which comprises a fixing system, as previously described, for fixing a crosspiece to cover said interspace.

A further object of the present patent is a method as defined in claim 12 for fixing a crosspiece, preferably a groove-shaped crosspiece, at an interspace comprised between the side walls of consecutive modules of a piece of furniture.

Preferably, the fixing step of the first and second supporting element comprises the following sub-steps:
a. arranging a plurality of template elements on at least one supporting element frontally with respect to the crosspiece, each template element having a predetermined length to establish the correct positioning of the relative supporting element;
b. positioning the first and second supporting elements such that the template elements are aligned with a front edge of the side wall of the first and second modules of the piece of furniture, so that the supporting elements are arranged at the correct length with respect to the front edge of the wall;
c. removing the plurality of template elements from the first and second supporting elements after fixing the first and second supporting elements.

According to a last aspect, the fixing step of the first and second supporting elements comprises the sub-step of drilling a hole in a first surface portion of the first supporting element and a second surface portion 2b of the second supporting element for fixing the first and second supporting elements through fixing means comprising a plurality of screws.

### BRIEF DESCRIPTION OF THE DRAWINGS

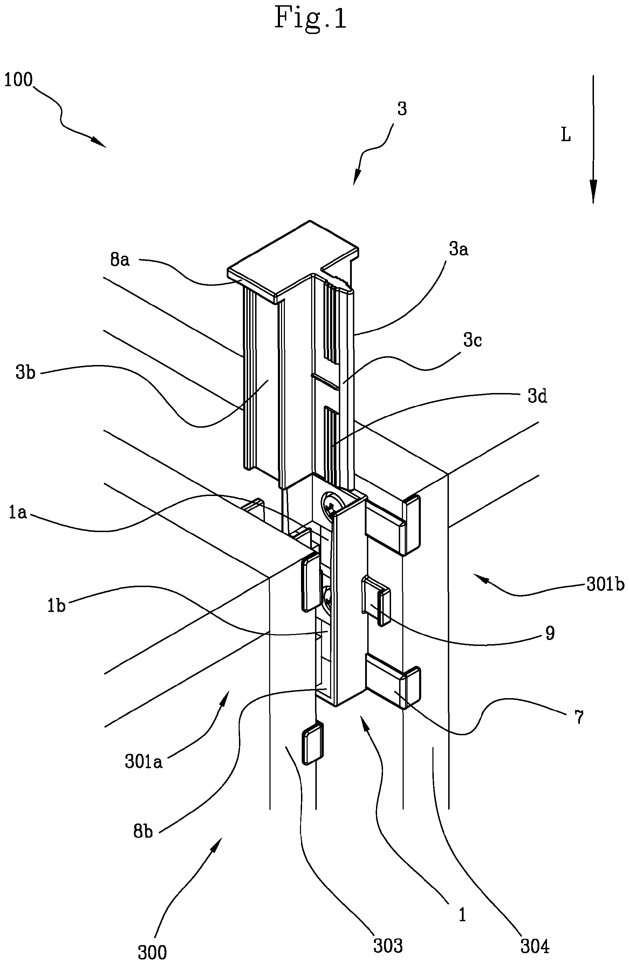

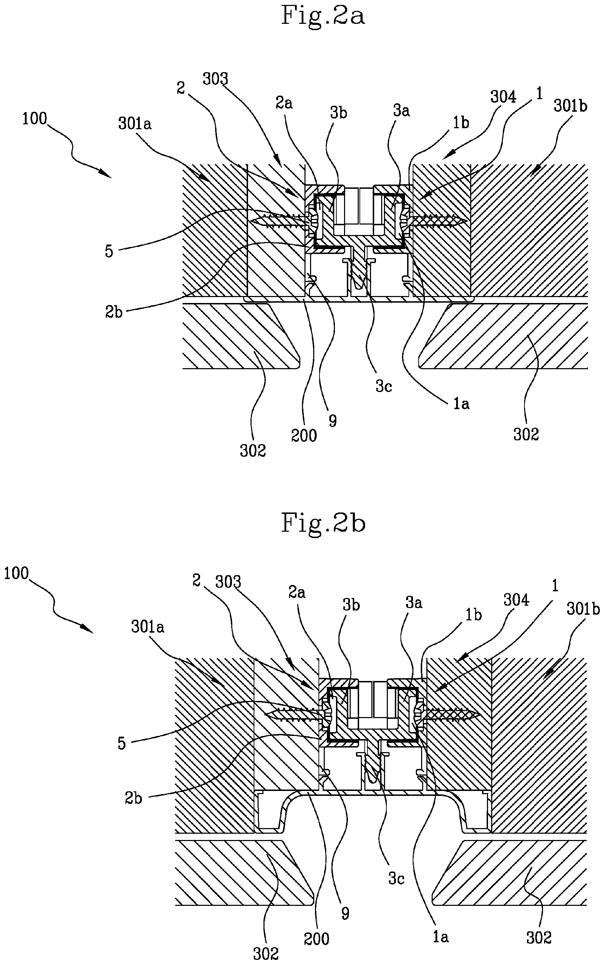

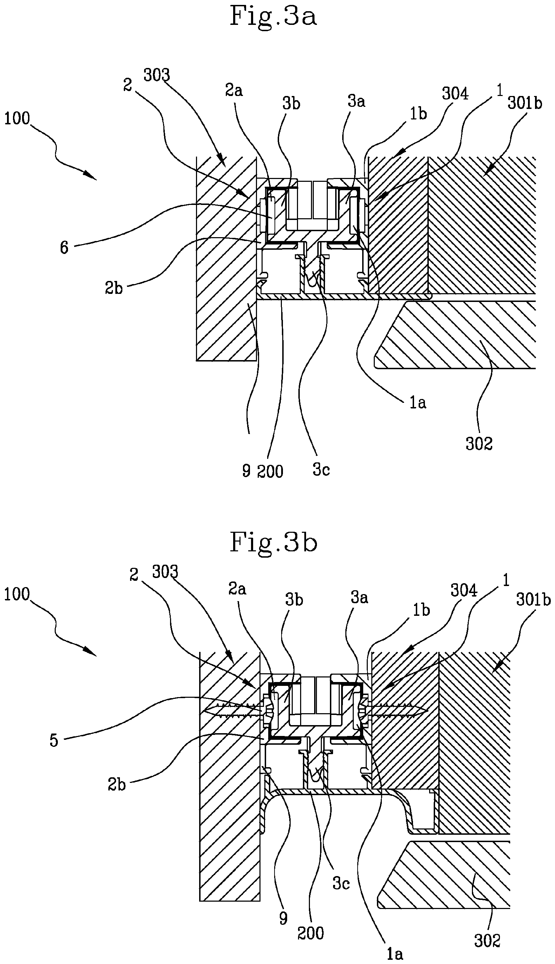

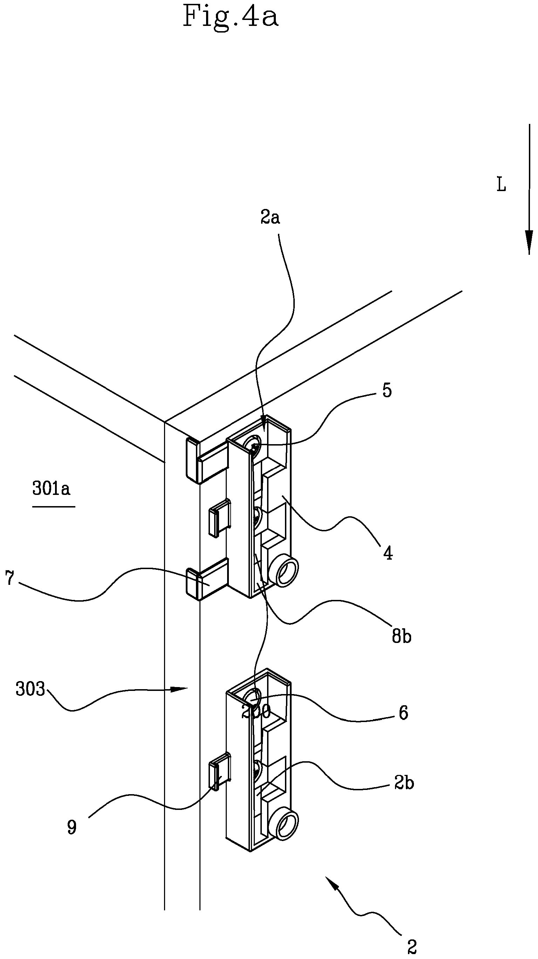

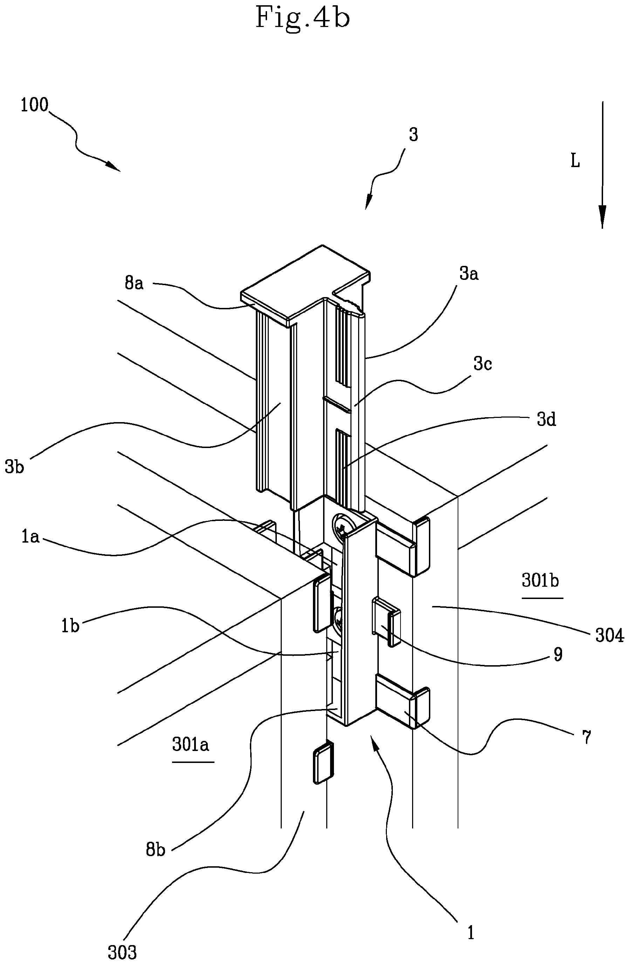

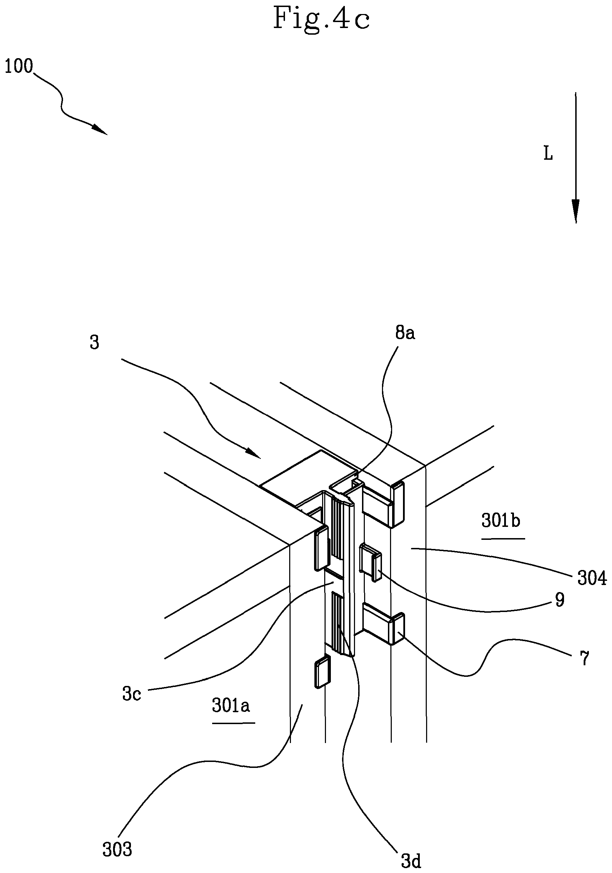

Further characteristics and advantages of the present invention will become more apparent from the approximate and thus non-limiting description of a preferred, but not exclusive, embodiment of a fixing system for fixing a groove-shaped crosspiece at at least one interspace comprised between the side walls of consecutive modules of a same piece of furniture, as illustrated in the accompanying drawings, wherein:
▪ figure 1 shows a perspective view of the components of the fixing system according to the invention;
▪ figures 2a and 2b show a top view of a section of the fixing system in a constrained state interposed between two modules of the piece of furniture with a grooved and flat crosspiece;
▪ figures 3a and 3b show a top view of a section of the fixing system in a constrained state interposed between a side module of the piece of furniture and a side closure panel with a grooved and flat crosspiece;
▪ figures 4a to 4c are perspective views of the main steps of the fixing method according to the present invention.

In the following description, the identical reference characters indicate identical or corresponding parts in the different views.

### DETAILED DESCRIPTION

The present invention relates to a fixing system 100 for fixing a groove-shaped crosspiece 200 at at least one interspace comprised between the side walls of consecutive modules 301 of a same piece of furniture 300 and the relative fixing method , specifically, of the fixing module 301 in the fixing system 100.

With reference to the above figures, the reference number 100 has been used to comprehensively indicate a fixing system of a groove-shaped crosspiece 200 at at least one interspace comprised between the side walls of the consecutive modules 301 of a same piece of furniture 300 according to the present invention.

According to a general concept of the invention, figure 1 shows the fixing module 301 constituted by three elements: a first supporting element 1, a second supporting element 2 and a connection element 3. In other words, the fixing module 301 is not a single body, but is formed by three separate bodies.

At least one fixing module 301 determines the fixing system 100 of a crosspiece 200, preferably a groove-shaped one.

The piece of furniture 300 is composed of at least two modules 301 arranged side by side, such that the side walls of each one are facing each other, as can be seen in figures 2a and 2b.

It should be noted in figures 3a and 3b, that the fixing system 100 according to the present invention is also used for the fixing of the side closure panels of the piece of furniture 300. Therefore, in this case the interspace (explained below) is defined between a module 301 and the side closure panel, which defines a side wall.

The side walls facing each other are not in contact with each other, but are arranged at a predefined distance, also defined as an interspace, within which the fixing system 100 is placed, which performs the function of holding the modules 301 together and providing a fixing point for a crosspiece 200 to be installed to cover this interspace, thus giving continuity to the structure of the piece of furniture 300.

In both cases, i.e. both when the side wall of a module 301a is facing another module 301b, or when it is facing a side closure panel, the comprised interspace has the same width and can be overlaid by a groove-shaped crosspiece 200, as shown in images 2a and 3a, or by a flat crosspiece 200, as shown in images 2b and 3b.

The main difference between the two types of crosspieces 200 lies in their depth, which is greater in the case of a groove-shaped crosspiece 200, which makes it possible to have more useful space for grasping a panel 302 of the piece of furniture 300 and opening it.

According to figure 1, the first supporting element 1 and the second supporting element 2 comprise surfaces suited for their fixing to the side walls of the module 301 of the piece of furniture 300, at least one lateral retention element 4, at least one template element 7, holes 6 for the interposition of fixing means 5 and, possibly, travel limit stop elements 8.

The connection element 3 comprises a first part 3a and a second part 3b which can be connected with the first and second supporting elements 1,2, travel limit stop elements 8 and reversible connecting means 3c.

The first supporting element 1 is shaped in such a way as to define a first sliding track 1a, with a longitudinal direction of extension L, and to be fixed to a first side wall 303 of a first module 301a of the piece of furniture 300. Symmetrically, the second supporting element 2 is shaped in such a way as to define a second sliding track 2a, extending along a longitudinal direction of extension L parallel to the preceding one, and to be fixed to a second side wall 304 of a second module 301b of the piece of furniture 300.

The two sliding tracks 1a, 2a are facing each other and are substantially aligned along a plane that passes through them and extends parallel to the crosspiece 200.

Once the modules 301 of the piece of furniture 300 are positioned at the exact distance, the connection element 3 can be interposed between the first supporting element 1 and the second supporting element 2, specifically the first part 3a of the connection element 3 that is slidable through the first track 1a defined by the first supporting element 1, while the second part 3b of the connection element 3 is able to slide inside the second track 2a defined by the second supporting element 2.

More precisely, the first track 1a of the first supporting element 1 is defined by the first portion thereof, capable of coupling with the surface of the side wall of the first module 301a to implement the fixing, and by two lateral edges. Similarly, the second track 2a is defined by the second portion 2b and two other lateral edges.

The interposition of the fixing means 5 between the first portion 1b and the corresponding side wall and between the second portion 2b and the corresponding side wall makes it possible to fix the first and second supporting elements 2 to the relative modules 301. Since in most cases the fixing means 5 comprise a screw, such first portion 1b and second portion 2b are equipped with holes 6 for the passage of said screws.

On the side opposite the first portion 1b and the second portion 2b with respect to the relative tracks associated with them, the first and second supporting elements 2 have at least one lateral retention element 4 each, such that the first part 3a and the second part 3b of the connection element 3 are interposed between said lateral retention element and the first portion 1b and the second portion 2b, respectively. This lateral retention element 4 forms a constraint for the first part 3a and the second part 3b of the connection element 3 along a direction which is transverse to the longitudinal direction of extension L of the tracks, regardless allowing the sliding of the connection element 3 through the first and second track 2a simultaneously.

Moreover, structurally the lateral retention element 4 is placed in a position which is staggered with respect to the holes 6 formed on the first portion 1b and the second portion 2b, such to facilitate the application of the screws, and with respect to the width of the portion that is opposite to it, it extends for a smaller width in order to leave a track for the passage of the connection element 3.

On a front portion of at least one supporting element, template elements 7 can be present or can be installed, useful for precise positioning and orientation, and furthermore, for the precise correspondence between the supporting elements 1, 2.

The template elements 7 extend from a front portion with respect to the longitudinal extension L of the crosspiece 200 when installed, towards the edge of the relative side wall, which is also frontal, and can further have a flap folded along the thickness of this side wall. The length of this extension is predetermined on the basis of the point of the respective side wall where the first and second supporting elements 1, 2 are to be placed. Furthermore, to properly orient the supporting elements 1, 2, there are usually at least two template elements 7 at the ends of the corresponding track.

In any case, such template elements 7, following the fixing of the supporting elements 1, 2 on the relative side walls, are useless in relation to the operation of the fixing system 100, and can therefore be easily removed. In this regard, the template elements 7 have a notch with respect to the rest of the body of the supporting elements 1, 2 to facilitate their removal.

The same front portion of the supporting elements also has abutment elements 9 that extend for a length which is less than the distance between the front portion and the edge of the side wall, as their function is the provision of additional contact points for the positioning of the crosspiece 200. In this case, the rear surface of the crosspiece 200 comprises protruding stop elements which are arranged at the abutment elements 9 such to facilitate contact.

Finally, the supporting elements 1, 2, which have a predetermined length along the longitudinal direction of extension L, have travel limit stop elements 8 able to stop the connection element 3 in a constrained state, forming constraints between the comprised stop elements 8b and the connection element 3 itself.

Alternatively or in addition, such travel limit stop elements 8 can be positioned at one end of the connection element 3. This element, which has a pair of ends along the longitudinal direction of extension along which it extends, has protrusions 8a at one of its ends which can create constraint points with at least one of the supporting elements and thus stop in a constrained state itself. Substantially, the end comprising such supports is the last end able to slide through the first track 1a and the second track 2a if there are no protrusions 8a.

Finally, the connection element 3 has reversible connecting means 3c on one of its front portions with respect to the frontal direction of extension in which the crosspiece 200 stops when fixed. These reversible connecting means 3c are active on a rear surface of the crosspiece 200. The front surface or the front of the crosspiece 200 is instead visible and can have a recessed groove (scaled) or flat shape.

Preferably, the supporting elements 1, 2 are distanced apart in a predefined space and the reversible connecting means 3c are arranged at said predefined space. Even more preferably, the reversible connecting means extend beyond the tracks 2a and 2b toward the crosspiece 200.

These reversible connecting means 3c usually consist of a spear-shaped element protruding frontally with respect to the fixing module 301 constituted by the supporting elements and the connection element 3. The spear-shaped element is required as the fixing point for the crosspiece 200, and to perform this function it comprises two opposite surfaces, one of which faces towards the side wall of the first module 301, while the other faces toward the side wall of the second module 301. These surfaces are knurled with parallel lines 3d substantially having two different orientations: a plurality of mutually parallel lines in relief is oriented along the longitudinal direction of extension L of the crosspiece 200 itself to determine multiple useful fixing points for the crosspiece 200 in order to be able to fix it to the fixing system 100; at least one line in relief on each surface is instead oriented perpendicular to the preceding ones, such to provide an area with enough friction to restrain the sliding of the crosspiece 200 (in case this is positioned vertically and therefore subjected to the force of gravity).

In order to securely fix the crosspiece 200, whether it is oriented horizontally or vertically or obliquely, to the piece of furniture 300 to create an aesthetic effect of continuity and cover the interspace between the modules 301, multiple fixing modules 301 can be installed in several points of the side walls of the modules 301 to provide more useful fixing points. A modular fixing system 100, i.e. which comprises a plurality of fixing modules 301, is able to yield the same results, with less installation difficulties with respect to the use of a single fixing module 301 which can extend for a length equal to or near that of the crosspiece 200.

Preferably, the crosspiece 200 is oriented vertically.

A further object of the present invention is a fixing method, as defined in claim 12, of a crosspiece 200, which derives directly from the above and is recalled in part here below. Figures 4a to 4c show the method comprising the operating steps of:
a. fixing a first supporting element 1 having a first track 1a to the side wall of a first module 301a of the piece of furniture 300 through first fixing means 5;
b. fixing a second supporting element 2 having a second track 2a to the side wall of a second module 301b of the piece of furniture 300 through second fixing means 5;
c. positioning the first module 301a and the second module 301b, such that their side walls are mutually facing each other and at a predefined distance to define the interspace between the modules 301;
d. inserting a connection element 3 comprising a first part 3a and a second part 3b such that the first part 3a is slidable in the first track 1a and the second part 3b is slidable in the second track 2a;
e. connecting a crosspiece 200 to the connection element 3 through a reversible connecting means.

With the aim of positioning the first supporting element 1 and the second supporting element 2 as correctly as possible, their fixing step comprises the following sub-steps:
a. arranging a plurality of template elements on at least one supporting element frontally with respect to the crosspiece 200, each template element 7 having a predetermined length to establish the correct positioning of the relative supporting elements 1, 2;
b. positioning the first supporting element 1 and the second supporting element 2 such that the template elements are aligned with a front edge of the side wall of the first module 301 and the second module 301 of the piece of furniture 300, so that the supporting elements are arranged at the correct length with respect to said front edge of the wall;
c. removing the plurality of template elements from the first supporting element 1 and the second supporting element 2 after fixing the first supporting element 1 and the second supporting element 2.

Finally, to further simplify the fixing step during the interposition of the fixing means 5, usually with screws, the insertion of a sub-step of drilling the first surface portion 1b of the first supporting element 1 and the second surface portion 2b of the second supporting element 2 is envisaged to fix the first supporting element 1 itself and the second supporting element 2 itself through fixing means 5 comprising a plurality of screws.

The present invention allows the above proposed objects to be achieved, in particular it makes it possible to avoid the connection screws of the modules 301 being visible to the end user from the outside and, at the same time, makes it possible to exploit a greater depth for the fixing of deep grooves (of different sizes) or for the fixing of flat grooves.

Any modifications or variants which, in the light of the description, are evident to the person skilled in the art, must be considered to fall within the scope of protection established by the present invention as defined in the attached claims, according to considerations of technical equivalence.

## Claims

1. A piece of furniture (300) comprising a plurality of consecutive modules (301) and a horizontal or vertical or oblique interspace comprised between the side walls of said modules (301) and comprising a fixing system (100); said fixing system (100), comprising:
- a crosspiece (200) fixable at an interspace comprised between the side walls of said consecutive modules (301) of the piece of furniture (300);
- a first supporting element (1) defining a first track (1a) with a longitudinal direction of extension (L), and having at least a first portion (1b) that can be fixed on the side wall of a first module (301a) of the piece of furniture (300);
- a second supporting element (2) that defines a second track (2a) with a longitudinal direction of extension (L) substantially parallel to the direction of extension of the first track (1a), and having at least a second portion (2b) that can be fixed on the side wall of a second module (301b) of the piece of furniture (300) and that faces the side wall of the first module (301a) of the piece of furniture (300);
- a connection element (3) slidably interposed between said first supporting element (1) and said second supporting element (2), comprising a first part (3a) that is slidable in said first track (1a) and a second part (3b) that is slidable in said second track (2a), said connection element (3) being configurable in a released state, wherein said connection element (3) is not in contact with said first supporting element (1) and said second supporting element (2), and a constrained state, wherein said connection element (3) is inserted between said first track (1a) and said second track (2a) at the same time,
**characterized in that** said connection element (3) comprises reversible connecting means (3c) arranged on a front portion of said connection element (3) facing the exterior of said first (1a) and second tracks (2a) and, in use, facing the crosspiece (200) for fixing the crosspiece (200).

2. A piece of furniture (300) according to claim 1, wherein said first supporting element (1) has at least one lateral retention element (4) opposite said first portion (1b) with respect to said first track (1a) and said first part (3a) of said connection element (3) being interposed between said first portion (1b) and said lateral retention element so as to define a lateral constraint with respect to said longitudinal direction of extension (L);
said second supporting element has at least one lateral retention element (4) opposite said second portion (2b) with respect to said second track (2a) and said second part of said connection element (3) being interposed between said second portion (2b) and said lateral retention element (4) so as to define a lateral constraint with respect to said longitudinal direction of extension (L).

3. A piece of furniture (300) according to any one of the preceding claims, wherein at least one supporting element has, on a front portion thereof facing the crosspiece (200), at least one template element (7) for proper positioning of the at least one supporting element with respect to an edge of the side wall of the corresponding module (301) of the piece of furniture (300); said template element (7) extending in length for a pre-established length from said at least one supporting element to a front edge of the corresponding side wall so as to distance the relative track according to said pre-established length; said template element (7) being removable from the relative supporting element when said supporting element proves to be fixed to the side wall of the relative module (301) of the piece of furniture (300).

4. A piece of furniture (300) according to any one of the preceding claims, comprising a plurality of template elements extending in length for a pre-established length from at least one supporting element to a front edge of the corresponding side wall and arranged at a distance from each other so as to obtain precise alignment and positioning of the relative supporting element.

5. A piece of furniture (300) according to any one of the preceding claims, comprising at least one travel limit stop element (8) arranged between said connection element (3) and at least one supporting element, for stopping the sliding of said connection element (3) in a constraining state; said connection element (3) extending between two ends located along said longitudinal direction of extension (L).

6. A piece of furniture (300) according to claim 5, wherein said at least one travel limit stop element (8) comprises a protrusion (8a) of the connection element (3), being arranged at one end of said connection element (3) which overlaps for the formation of at least one of said stop elements (8b) to cause said stopping.

7. A piece of furniture (300) according to claim 5 or 6, wherein said at least one travel limit stop (8) comprises stop elements (8b) arranged at one end of at least one track for forming a constraint between said stop elements (8b) and one end of said connection element (3).

8. A piece of furniture (300) according to any one of the preceding claims, wherein said spear-shaped element extends along said longitudinal direction of extension (L) and has a first surface facing the side wall of the first module (301a) and a second surface facing the side wall of the second module (301b).

9. A piece of furniture (300) according to claim 8, wherein said first surface and said second surface are knurled with parallel lines (3d) in relief oriented along said longitudinal direction of extension (L) and along a direction transverse to said longitudinal direction of extension (L) to fix the crosspiece (200) and to prevent sliding of the crosspiece (200) along said longitudinal direction of extension (L).

10. **A** piece of furniture (300) according to any one of the preceding claims, wherein at least one supporting element has, on a front portion, an abutment element (9) extending towards the front portion of the panel so as to define a resting element for the crosspiece (200) when it is being fixed.

11. **A** piece of furniture (300) according to any one of the preceding claims, comprising a plurality of fixing modules (301), each of which comprising a first supporting element (1), a second supporting element (2) and a connection element (3); said fixing modules (301) being arranged along the direction of longitudinal extension of the interspace between the side walls of consecutive modules (301) of the same piece of furniture (300).

12. **A** method for fixing a crosspiece (200) at an interspace comprised between the side walls of consecutive modules (301) of a piece of furniture (300), **characterized in that** it comprises the operative steps of:
a. fixing a first supporting element (1) having a first track (1a) on the side wall of a first module (301a) of the piece of furniture (300) by means of first fixing means (5);
b. fixing a second supporting element (2) having a second track (2a) on the side wall of a second module (301b) of the piece of furniture (300) by means of second fixing means (5);
c. positioning said first module (301a) and said second module (301b), so that the side walls thereof face each other and are at a pre-established distance so as to define said interspace between modules (301);
d. inserting a connection element (3) comprising a first part (3a) and a second part (3b) in such a manner that said first part (3a) is slidable in said first track (1a) and said second part (3b) is slidable in said second track (2a);
e. realizing, on the connection element (3), reversible connecting means extending beyond the tracks (2a, 2b) toward the crosspiece (200) and arranged at a predefined space comprised between said supporting elements (1, 2) distanced each other, said reversible connecting means (3c) comprising a spear-shaped element protruding frontally with respect to the fixing module (301) constituted by the supporting elements and the connection element (3);
f. connecting the crosspiece (200) to said connection element (3) by means of said reversible connecting means.

13. The method for fixing according to claim 12, wherein the step of fixing said first supporting element (1) and said second supporting element (2) comprises the following sub-steps:
a. arranging a plurality of template elements on at least one supporting element frontally with respect to the crosspiece (200), each template element (7) being of a pre-established extension to establish proper positioning of the relative supporting element;
b. positioning of said first supporting element (1) and said second supporting element (2) in such a manner that said template elements are aligned with a front edge of the side wall of said first module (301a) and said second module (301b) of the piece of furniture (300), so that the supporting elements are arranged at the proper length with respect to said front edge of the wall;
c. removing said plurality of template elements from said first supporting element (1) and from said second supporting element (2) after fixing said first supporting element (1) and said second supporting element (2).

14. **The** method for fixing according to any one of claims 12 or 13, wherein the step of fixing said first supporting element (1) and said second supporting element (2) comprises the sub-step of drilling holes in a first surface portion (1b) of said first supporting element (1) and in a second surface portion (2b) of said second supporting element (2) to fix the first supporting element (1) and the second supporting element (2) by means of said fixing means (5) comprising a plurality of screws.

## Patentansprüche

1. Möbelstück (300), umfassend eine Vielzahl von aufeinanderfolgenden Modulen (301) und einen horizontalen oder vertikalen oder schräg verlaufenden Zwischenraum zwischen den Seitenwänden der Module (301) und umfassend ein Befestigungssystem (100), wobei das Befestigungssystem (100) Folgendes umfasst:
- einen Querträger (200), der an einem Zwischenraum zwischen den Seitenwänden der aufeinanderfolgenden Module (301) des Möbelstücks (300) befestigt ist;
- ein erstes Trägerelement (1), definierend eine erste Bahn (1a) mit einer Längsausdehnungsrichtung (L) und aufweisend mindestens einen ersten Abschnitt (1b), der auf der Seitenwand eines ersten Moduls (301a) des Möbelstücks (300) befestigt werden kann;
- ein zweites Trägerelement (2), das eine zweite Bahn (2a) mit einer Längsausdehnungsrichtung (L) definiert, die im Wesentlichen parallel zur Ausdehnungsrichtung der ersten Bahn (1a) verläuft, und aufweisend mindestens einen zweiten Abschnitt (2b), der auf der Seitenwand eines zweiten Moduls (301b) des Möbelstücks (300) befestigt werden kann und der der Seitenwand des ersten Moduls (301a) des Möbelstücks (300) zugewandt ist;
- ein Verbindungselement (3), das verschiebbar zwischen dem ersten Trägerelement (1) und dem zweiten Trägerelement (2) eingesetzt ist, umfassend einen ersten Teil (3a), der in der ersten Bahn (1a) verschiebbar ist, und einen zweiten Teil (3b), der in der zweiten Bahn (2a) verschiebbar ist, wobei das Verbindungselement (3) in einem gelösten Zustand auslegbar ist, in dem das Verbindungselement (3) nicht mit dem ersten Trägerelement (1) und dem zweiten Trägerelement (2) in Kontakt ist, und einem eingeschränkten Zustand, in dem das Verbindungselement (3) zwischen der ersten Bahn (1a) und der zweiten Bahn (2a) gleichzeitig eingefügt ist,
**dadurch gekennzeichnet, dass** das Verbindungselement (3) reversierbare Verbindungsmittel (3c) umfasst, die auf einem vorderen Abschnitt des Verbindungselements (3) angeordnet und der Außenseite der ersten (1a) und der zweiten Bahn (2a) zugewandt und in Verwendung dem Querträger (200) zugewandt sind, um den Querträger (200) zu befestigen.

2. Möbelstück (300) nach Anspruch 1, wobei das erste Trägerelement (1) mindestens ein seitliches Halteelement (4) aufweist, das gegenständig zum ersten Abschnitt (1b) in Bezug auf die erste Bahn (1a) angeordnet ist, und der erste Teil (3a) des Verbindungselements (3) zwischen dem ersten Abschnitt (1b) und dem seitlichen Halteelement eingesetzt ist, sodass eine seitliche Einschränkung in Bezug auf die Längsausdehnungsrichtung (L) definiert wird;
wobei das zweite Trägerelement mindestens ein seitliches Halteelement (4) aufweist, das gegenständig zum zweiten Abschnitt (2b) in Bezug auf die zweite Bahn (2a) angeordnet ist, und der zweite Teil des Verbindungselements (3) zwischen dem zweiten Abschnitt (2b) und dem seitlichen Halteelement (4) eingesetzt ist, sodass eine seitliche Einschränkung in Bezug auf die Längsausdehnungsrichtung (L) definiert wird.

3. Möbelstück (300) nach einem der vorhergehenden Ansprüche, wobei das mindestens eine Trägerelement auf einem vorderen Abschnitt, der dem Querträger (200) zugewandt ist, mindestens ein Leitelement (7) zum korrekten Positionieren von mindestens einem Trägerelement in Bezug auf eine Kante der Seitenwand des entsprechenden Moduls (301) des Möbelstücks (300) aufweist; das Leitelement (7) sich in der Länge um eine vorgegebene Länge vom mindestens einen Trägerelement zu einer Vorderkante der entsprechenden Seitenwand erstreckt, sodass die jeweilige Bahn gemäß der vorgegebenen Länge beabstandet wird; das Leitelement (7) vom jeweiligen Trägerelement abnehmbar ist, wenn sich herausstellt, dass das Trägerelement an der Seitenwand des jeweiligen Moduls (301) des Möbelstücks (300) befestigt ist.

4. Möbelstück (300) nach einem der vorhergehenden Ansprüche, umfassend eine Vielzahl von Leitelementen, die sich in der Länge um eine vorgegebene Länge vom mindestens einen Trägerelement zu einer Vorderkante der entsprechenden Seitenwand erstrecken und an einem Abstand voneinander angeordnet sind, sodass eine präzise Ausrichtung und Positionierung des jeweiligen Trägerelements erzielt wird.

5. Möbelstück (300) nach einem der vorhergehenden Ansprüche, umfassend mindestens ein Endlagenstoppelement (8), das zwischen dem Verbindungselement (3) und dem mindestens einen Trägerelement angeordnet ist, um das Verschieben des Verbindungselements (3) in einem Einschränkungszustand zu stoppen, wobei sich das Verbindungselement (3) zwischen zwei Enden erstreckt, die entlang der Längsausdehnungsrichtung (L) befindlich sind.

6. Möbelstück (300) nach Anspruch 5, wobei das mindestens eine Endlagenstoppelement (8) einen Vorsprung (8a) des Verbindungselements (3) umfasst, der an einem Ende des Verbindungselements (3) angeordnet ist, das zur Formung von mindestens einem der Stoppelemente (8a) überlappt, um das Stoppen herbeizuführen.

7. Möbelstück (300) nach Anspruch 5 oder 6, wobei das mindestens eine Endlagenstoppelement (8) zwei Stoppelemente (8b) umfasst, die an einem Ende der mindestens einen Bahn angeordnet sind, um eine Einschränkung zwischen den Stoppelementen (8b) und einem Ende des Verbindungselements (3) zu formen.

8. Möbelstück (300) nach einem der vorhergehenden Ansprüche, wobei sich das spießförmige Element entlang der Längsausdehnungsrichtung (L) erstreckt und eine erste Oberfläche aufweist, die der Seitenwand des ersten Moduls (301a) zugewandt ist, und eine zweite Oberfläche, die der Seitenwand des zweiten Moduls (301b) zugewandt ist.

9. Möbelstück (300) nach Anspruch 8, wobei die erste Oberfläche und die zweite Oberfläche mit parallelen Linien (3d) im Relief gerändelt sind, die entlang der Längsausdehnungsrichtung (L) und entlang einer Richtung, die quer zur Längsausdehnungsrichtung (L) verläuft, ausgerichtet sind, um den Querträger (200) zu befestigen und das Verschieben des Querträgers (200) entlang der Längsausdehnungsrichtung (L) zu vermeiden.

10. Möbelstück (300) nach einem der vorhergehenden Ansprüche, wobei mindestens ein Trägerelement auf einem vorderen Abschnitt ein Anschlagselement (9) aufweist, das sich hinführend zum vorderen Abschnitt der Platte erstreckt, sodass ein Auflageelement für den Querträger (200) definiert wird, wenn dieser befestigt ist.

11. Möbelstück (300) nach einem der vorhergehenden Ansprüche, umfassend eine Vielzahl von Befestigungsmodulen (301), von denen ein jedes ein erstes Trägerelement (1), ein zweites Trägerelement (2) und ein Verbindungselement (3) umfasst, wobei die Befestigungselemente (301) entlang der Längsausdehnungsrichtung des Zwischenraums zwischen den Seitenwänden der aufeinanderfolgenden Module (301) desselben Möbelstücks (300) angeordnet sind.

12. Verfahren zur Befestigung eines Querträgers (200) an einem Zwischenraum zwischen den Seitenwänden aufeinanderfolgender Module (301) eines Möbelstücks (300), **dadurch gekennzeichnet, dass** es die folgenden Betriebsschritte umfasst:
a. Befestigen eines ersten Trägerelements (1), aufweisend eine erste Bahn (1a) auf der Seitenwand eines ersten Moduls (301a) des Möbelstücks (300), durch erste Befestigungsmittel (5);
b. Befestigen eines zweiten Trägerelements (2), aufweisend eine zweite Bahn (2a) auf der Seitenwand eines zweiten Moduls (301b) des Möbelstücks (300), durch zweite Befestigungsmittel (5);
c. Positionieren des ersten Moduls (301a) und des zweiten Moduls (301b), sodass deren Seitenwände einander zugewandt sind und sich an einem vorgegebenen Abstand befinden, sodass der Zwischenraum zwischen Modulen (301) definiert wird;
d. Einfügen eines Verbindungselements (3), umfassend einen ersten Teil (3a) und einen zweiten Teil (3b), sodass der erste Teil (3a) in der ersten Bahn (1a) verschiebbar ist und der zweite Teil (3b) in der zweiten Bahn (2a) verschiebbar ist;
e. Realisieren reversierbarer Verbindungsmittel auf dem Verbindungselement (3), die sich jenseits der Bahnen (2a, 2b) hinführend zum Querträger (200) erstrecken und an einem vorgegebenen Raum zwischen den Trägerelementen (1, 2) angeordnet und voneinander beabstandet sind, wobei die reversierbaren Verbindungsmittel (3c) ein spießförmiges Element umfassen, das vorderseitig in Bezug auf das Befestigungsmodul (301) hervorspringt und durch die Trägerelemente und das Verbindungselement (3) gebildet ist;
f. Verbinden des Querträgers (200) mit dem Verbindungselement (3) mittels der reversierbaren Verbindungsmittel.

13. Verfahren zur Befestigung nach Anspruch 12, wobei der Schritt zum Befestigen des ersten Trägerelements (1) und des zweiten Trägerelements (2) die folgenden Unterschritte umfasst:
a. Anordnen einer Vielzahl von Leitelementen auf dem mindestens einen Trägerelement vorderseitig in Bezug auf den Querträger (200), wobei ein jedes Leitelement (7) eine vorgegebene Ausdehnung aufweist, um die ordnungsgemäße Positionierung des jeweiligen Trägerelements herzustellen;
b. Positionieren des ersten Trägerelements (1) und des zweiten Trägerelements (2), sodass die Leitelemente fluchtend zur Vorderkante der Seitenwand des ersten Moduls (301a) und des zweiten Moduls (301b) des Möbelstücks (300) angeordnet sind, sodass die Trägerelemente an der richtigen Länge in Bezug auf die Vorderkante der Wand angeordnet sind;
c. Entfernen der Vielzahl von Leitelementen vom ersten Trägerelement (1) und vom zweiten Trägerelement (2) nach dem Fixieren des ersten Trägerelements (1) und des zweiten Trägerelements (2).

14. Verfahren zur Befestigung nach einem der Ansprüche 12 oder 13, wobei der Schritt zum Befestigen des ersten Trägerelements (1) und des zweiten Trägerelements (2) den Unterschritt zum Bohren von Löchern in einem ersten Oberflächenabschnitt (1b) des ersten Trägerelements (1) und in einem zweiten Oberflächenabschnitt (2b) des zweiten Trägerelements (2) zum Befestigen des ersten Trägerelements (1) und des zweiten Trägerelements (2) mittels der Befestigungsmittel (5), umfassend eine Vielzahl von Schrauben, umfasst.

## Revendications

1. Meuble (300) comprenant une pluralité de modules (301) consécutifs et un espace intermédiaire horizontal ou vertical ou oblique compris entre les parois latérales desdits modules (301) et comprenant un système de fixation (100) ; ledit système de fixation (100), comprenant :
- une traverse (200) pouvant être fixée à un espace intermédiaire compris entre les parois latérales desdits modules (301) consécutifs du meuble (300) ;
- un premier élément de support (1) définissant une première coulisse (1a) ayant une direction longitudinale d'extension (L), et comportant au moins une première partie (1b) qui peut être fixée sur la paroi latérale d'un premier module (301a) du meuble (300) ;
- un deuxième élément de support (2) qui définit une deuxième coulisse (2a) ayant une direction longitudinale d'extension (L) sensiblement parallèle à la direction d'extension de la première coulisse (1a), et comportant au moins une deuxième partie (2b) qui peut être fixée sur la paroi latérale d'un deuxième module (301b) du meuble (300) et qui fait face à la paroi latérale du premier module (301a) du meuble (300) ;
- un élément de raccordement (3) interposé de manière coulissante entre ledit premier élément de support (1) et ledit deuxième élément de support (2), comprenant une première partie (3a) pouvant coulisser dans ladite première coulisse (1a) et une deuxième partie (3b) pouvant coulisser dans ladite deuxième coulisse (2a), ledit élément de raccordement (3) étant configurable dans un état libéré, dans lequel ledit élément de raccordement (3) n'est pas en contact avec ledit premier élément de support (1) et ledit deuxième élément de support (2), et un état contraint, dans lequel ledit élément de raccordement (3) est inséré entre ladite première coulisse (1a) et ladite deuxième coulisse (2a) en même temps,
**caractérisé en ce que** ledit élément de raccordement (3) comprend des moyens de raccordement réversibles (3c) disposés sur une partie avant dudit élément de raccordement (3) orientée vers l'extérieur desdites première (1a) et deuxième coulisses (2a) et, lors de l'utilisation, orientée vers la traverse (200) pour fixer la traverse (200).

2. Meuble (300) selon la revendication 1, dans lequel ledit premier élément de support (1) comporte au moins un élément de rétention latéral (4) opposé à ladite première partie (1b) par rapport à ladite première coulisse (1a) et ladite première partie (3a) dudit élément de raccordement (3) étant interposée entre ladite première partie (1b) et ledit élément de rétention latéral de manière à définir une contrainte latérale par rapport à ladite direction longitudinale d'extension (L) ;
ledit deuxième élément de support comporte au moins un élément de rétention latéral (4) opposé à ladite deuxième partie (2b) par rapport à ladite deuxième coulisse (2a) et ladite deuxième partie dudit élément de raccordement (3) étant interposée entre ladite deuxième partie (2b) et ledit élément de rétention latéral (4) de manière à définir une contrainte latérale par rapport à ladite direction longitudinale d'extension (L).

3. Meuble (300) selon l'une quelconque des revendications précédentes, dans lequel au moins un élément de support comporte, sur une partie avant de celui-ci faisant face à la traverse (200), au moins un élément de gabarit (7) pour le positionnement correct de l'au moins un élément de support par rapport à un bord de la paroi latérale du module (301) correspondant du meuble (300) ; ledit élément de gabarit (7) s'étendant en longueur sur une longueur préétablie à partir dudit au moins un élément de support jusqu'à un bord avant de la paroi latérale correspondante de manière à éloigner la coulisse relative selon ladite longueur préétablie ;
ledit élément de gabarit (7) étant amovible de l'élément de support relatif lorsque ledit élément de support s'avère être fixé à la paroi latérale du module (301) relatif du meuble (300).

4. Meuble (300) selon l'une quelconque des revendications précédentes, comprenant une pluralité d'éléments de gabarit s'étendant en longueur sur une longueur préétablie à partir d'au moins un élément de support jusqu'à un bord avant de la paroi latérale correspondante et disposés à une certaine distance les uns des autres de manière à obtenir un alignement et un positionnement précis de l'élément de support relatif.

5. Meuble (300) selon l'une quelconque des revendications précédentes, comprenant au moins un élément de butée de fin de course (8) disposé entre ledit élément de raccordement (3) et au moins un élément de support, pour arrêter le coulissement dudit élément de raccordement (3) dans un état de contrainte ; ledit élément de raccordement (3) s'étendant entre deux extrémités situées le long de ladite direction longitudinale d'extension (L).

6. Meuble (300) selon la revendication 5, dans lequel ledit au moins un élément de butée de fin de course (8) comprend une protubérance (8a) de l'élément de raccordement (3), étant disposée à une extrémité dudit élément de raccordement (3) qui se chevauche pour la formation d'au moins un desdits éléments de butée (8b) pour provoquer ledit arrêt.

7. Meuble (300) selon la revendication 5 ou 6, dans lequel ladite au moins une butée de fin de course (8) comprend des éléments de butée (8b) disposés à une extrémité d'au moins une coulisse pour former une contrainte entre lesdits éléments de butée (8b) et une extrémité dudit élément de raccordement (3).

8. Meuble (300) selon l'une quelconque des revendications précédentes, dans lequel ledit élément en forme de lance s'étend le long de ladite direction longitudinale d'extension (L) et comporte une première surface faisant face à la paroi latérale du premier module (301a) et une deuxième surface faisant face à la paroi latérale du deuxième module (301b).

9. Meuble (300) selon la revendication 8, dans lequel ladite première surface et ladite deuxième surface sont moletées avec des lignes parallèles (3d) en relief orientées le long de ladite direction longitudinale d'extension (L) et le long d'une direction transversale à ladite direction longitudinale d'extension (L) pour fixer la traverse (200) et empêcher le coulissement de la traverse (200) le long de ladite direction longitudinale d'extension (L).

10. Meuble (300) selon l'une quelconque des revendications précédentes, dans lequel au moins un élément de support comporte, sur une partie avant, un élément de butée (9) s'étendant vers la partie avant du panneau de manière à définir un élément d'appui pour la traverse (200) lors de sa fixation.

11. Meuble (300) selon l'une quelconque des revendications précédentes, comprenant une pluralité de modules de fixation (301), chacun comprenant un premier élément de support (1), un deuxième élément de support (2) et un élément de raccordement (3) ; lesdits modules de fixation (301) étant disposés le long de la direction d'extension longitudinale de l'espace intermédiaire entre les parois latérales de modules (301) consécutifs du même meuble (300).

12. Procédé de fixation d'une traverse (200) dans un espace intermédiaire compris entre les parois latérales de modules (301) consécutifs d'un meuble (300), **caractérisé en ce qu'**il comprend les étapes fonctionnelles de :
a. fixer un premier élément de support (1) comportant une première coulisse (1a) sur la paroi latérale d'un premier module (301a) du meuble (300) au moyen de premiers moyens de fixation (5) ;
b. fixer un deuxième élément de support (2) comportant une deuxième coulisse (2a) sur la paroi latérale d'un deuxième module (301b) du meuble (300) au moyen de deuxièmes moyens de fixation (5) ;
c. positionner ledit premier module (301a) et ledit deuxième module (301b) de manière à ce que leurs parois latérales se fassent face et soient à une distance préétablie de manière à définir ledit espace intermédiaire entre les modules (301) ;
d. insérer un élément de raccordement (3) comprenant une première partie (3a) et une deuxième partie (3b) de manière à ce que ladite première partie (3a) soit coulissante dans ladite première coulisse (1a) et que ladite deuxième partie (3b) soit coulissante dans ladite deuxième coulisse (2a) ;
e. réaliser, sur l'élément de raccordement (3), des moyens de raccordement réversibles s'étendant au-delà des coulisses (2a, 2b) vers la traverse (200) et disposés à un espace prédéfini compris entre lesdits éléments de support (1, 2) distants les uns des autres, lesdits moyens de raccordement réversibles (3c) comprenant un élément en forme de lance faisant saillie frontalement par rapport au module de fixation (301) constitué par les éléments de support et l'élément de raccordement (3) ;
f. raccorder la traverse (200) audit élément de raccordement (3) au moyen desdits moyens de raccordement réversibles.

13. Procédé de fixation selon la revendication 12, dans lequel l'étape de fixation dudit premier élément de support (1) et dudit deuxième élément de support (2) comprend les sous-étapes suivantes :
a. disposer une pluralité d'éléments de gabarit sur au moins un élément de support de manière frontale par rapport à la traverse (200), chaque élément de gabarit (7) étant d'une extension préétablie pour établir un positionnement correct de l'élément de support relatif ;
b. positionner ledit premier élément de support (1) et ledit deuxième élément de support (2) de manière à ce que lesdits éléments de gabarit soient alignés avec un bord avant de la paroi latérale dudit premier module (301a) et dudit deuxième module (301b) du meuble (300), de sorte que les éléments de support soient disposés à la longueur appropriée par rapport audit bord avant de la paroi ;
c. retirer ladite pluralité d'éléments de gabarit dudit premier élément de support (1) et dudit deuxième élément de support (2) après avoir fixé ledit premier élément de support (1) et ledit deuxième élément de support (2).

14. Procédé de fixation selon l'une quelconque des revendications 12 ou 13, dans lequel l'étape de fixation dudit premier élément de support (1) et dudit deuxième élément de support (2) comprend la sous-étape consistant à percer des trous dans une première partie de surface (1b) dudit premier élément de support (1) et dans une deuxième partie de surface (2b) dudit deuxième élément de support (2) pour fixer le premier élément de support (1) et le deuxième élément de support (2) au moyen desdits moyens de fixation (5) comprenant une pluralité de vis.
